# EUROPEAN PATENT APPLICATION

(11) **EP 1 522 911 A2**
(43) Date of publication of application: **13.04.2005**
(21) Application number: 04023808.1
(22) Date of filing: 06.10.2004
(51) Int. Cl.: G05B 19/418

(54) **Robotic tracking system for parts distribution**

(30) Priority: 07.10.2003 JP 2003348760
(71) Applicant: FANUC LTD, Minamitsuru-gun, Yamanashi 401-0597 (JP)
(72) Inventor: Ban, Kazunori, Minamitsuru-gun Yamanashi 401-0304 (JP); Jyumonji Takashi, Fujiyoshida-city Yamanashi 403-0005 (JP)
(74) Representative: Schmidt, Steffen J., Dipl.-Ing.

(57) **Abstract**

An image of a workpiece (10) conveyed by a feeding conveyor (3) is taken by a camera (7) of a visual sensor to detect a position of the workpiece. The moving amount of the feeding conveyor (3) is detected by a pulse coder (8). When a request for picking up a workpiece is issued to a plurality of robots (RB1, RB2), it is judged whether or not the robots can grip the workpiece positioned most downstream, based on current positions of the robots and a current position of the workpiece. The workpiece should be gripped before it reaches the downstream boundary line (TR1e, TR2e) in the tracking range of the robot. If the workpiece can be gripped, the robot picks up the workpiece. Based on the robot operating speed, the feeding speed of the feeding conveyor (3) is adjusted to reduce the waiting time of the plurality of robots (RB1, RB2) and to reduce the number of failures to hold the workpiece as far as possible.

## Description

### BACKGROUND OF THE INVENTION

### 1. Field of the Invention

The present invention relates to a physical distribution tracking system for transferring articles from a feeding conveyor to other positions using a robot.

### 2. Description of the Related Art

Conventionally, a robotic physical distribution tracking system in which a plurality of robots arranged along a feeding line of a feeding conveyor hold, for example, by gripping or sucking, articles conveyed by the feeding conveyor and transfer the held articles from the feeding conveyor to other positions is known as an article handling system using a visual sensor and an industrial robot.

In the case that a multiplicity of articles are conveyed on the feeding conveyor and are picked up from the conveyor by a plurality of the robots in such a robotic physical distribution tracking system, the plurality of robots are required to be operated efficiently.

In order to solve this problem, a system is suggested by Japanese Patent No. 3077563 in which two robots each provided with a camera for taking an image of the articles are disposed along a feeding line of a feeding conveyor, so that the two robots alternately suck and hold a predetermined number of articles.

A visual-sensor robot system having a tracking function is also suggested by Japanese Unexamined Patent Publication No. 9-131683 and includes a plurality of robots arranged along a feeding line of a feeding conveyor, a visual sensor arranged upstream of the feeding line of the feeding conveyor for imaging an article and detecting its position, and a robot control unit having a robot reservation means built therein for reserving a robot capable of catching and gripping each article based on the position of the article detected by the visual sensor, so that the robot assigned for each article is caused to carry out a task relating to the particular article in accordance with an operation reservation.

In the case that a robot picks out an article conveyed on the feeding conveyor, for example, by gripping or sucking, an increased number of articles conveyed on the feeding conveyor makes it necessary to increase either an operating speed of the robots or the number of robots. However, the operating speed of the robot has an upper limit, and therefore, the only way in many cases is to increase the number of robots. Further, in the case that a plurality of robots is disposed, it is desirable to operate the robots more efficiently.

The system described in Japanese Patent No. 3077563 employs a method in which each of upstream and downstream robots alternately pick up a predetermined number of articles from the feeding conveyor. Therefore, when the articles are conveyed at regular intervals, the robots operate alternately and can work efficiently. However, when the articles are conveyed at irregular intervals, the upstream robot sometimes enters the waiting state even if the upstream robot can hold articles, thereby resulting in a reduced efficiency.

On the other hand, in the robot system described in Japanese Unexamined Patent Publication No. 9-131683, the number of articles picked up from the feeding conveyor by each robot is not predefined, but an operation of a robot to hold articles is planned based on an operable period of the particular robot which is from a start of a tracking operation to a completion of one operation cycle. Therefore, even in the case that the interval at which the articles are conveyed becomes irregular, the upstream robot does not enter a standby state and can hold and pick up the articles efficiently. However, as the operation of the robot to hold the article is reserved based on the operable period of the particular robot, a change in the cycle time due to the change in the robot operation route sometimes requires the reservation to be changed, thereby increasing the processing load on the operation reservation unit.

### SUMMARY OF THE INVENTION

Accordingly, an object of the present invention is to provide a physical distribution tracking system, using a visual sensor and a plurality of robots, which can efficiently perform a tracking operation which includes the steps of handling and picking up workpieces, conveyed on a feeding conveyor, by means of the robots.

According to the present invention, there is provided a robotic physical distribution tracking system which includes a workpiece position detection means for detecting a position of a workpiece conveyed on a feeding conveyor, and a conveyor moving amount detection means for detecting a moving amount of the feeding conveyor, so that a robot handles a workpiece conveyed by the feeding conveyor, while at the same time tracking the workpiece based on a current position of the workpiece determined from a workpiece position determined by the workpiece position detection means and a moving amount of the conveyor determined by the conveyor moving amount detection means, which robotic physical distribution tracking system further includes a plurality of robots disposed along the feeding conveyor, and a workpiece distribution control means for judging whether or not one of the plurality of robots can handle one of a plurality of workpieces conveyed by the feeding conveyor, and determining a workpiece to be handled by the corresponding one of plurality of robots, from current positions of the plurality of workpieces, a current position of the corresponding one of the plurality of robots, an operating speed of the corresponding one of the plurality of robots, and a moving speed of the conveyor, whereby the plurality of robots sequentially hold, by gripping or sucking, and handle the workpieces fed by the feeding conveyor. Preferably, when a request to pick up a workpiece is issued to any one of the plurality of robots, the workpiece distribution control means judges whether or not each of plurality of workpieces can be handled in the order from a workpiece positioned most downstream on the feeding conveyor.

Preferably, the system further includes a means for adjusting the speed of the conveyor and can adjust the conveyor speed to reduce a waiting time of each robot due to a time waiting for a workpiece or the like so that each robot can handle the workpiece more efficiently.

In the robotic physical distribution tracking system according to the present invention, a plurality of robots can handle the workpieces to be processed fed by the feeding conveyor efficiently, so that the task, including the tracking operation, can be rationally carried out.

### BRIEF DESCRIPTION OF THE DRAWINGS

The above and other objects, features and advantages will be described in more detail below based on the preferred embodiments with reference to the accompanying drawings, wherein:
Fig. 1 is a schematic diagram of a physical distribution tracking system according to an embodiment of the present invention;
Fig. 2 is a block diagram of a robot control unit of the physical distribution tracking system shown in Fig. 1;
Fig. 3 is a flowchart of a process for detecting a workpiece executed by an image processing unit of a visual sensor of the physical distribution tracking system shown in Fig. 1;
Fig. 4 is a flowchart of a robot distribution process for distributing respective workpieces to respective robots, which is executed by the robot control unit of the physical distribution tracking system shown in Fig. 1;
Fig. 5 is a diagram illustrating a principle of operation for the robot distribution process; and
Fig. 6 is a flowchart of a process for adjusting a conveyor speed executed by the robot control unit.

### DETAILED DESCRIPTION

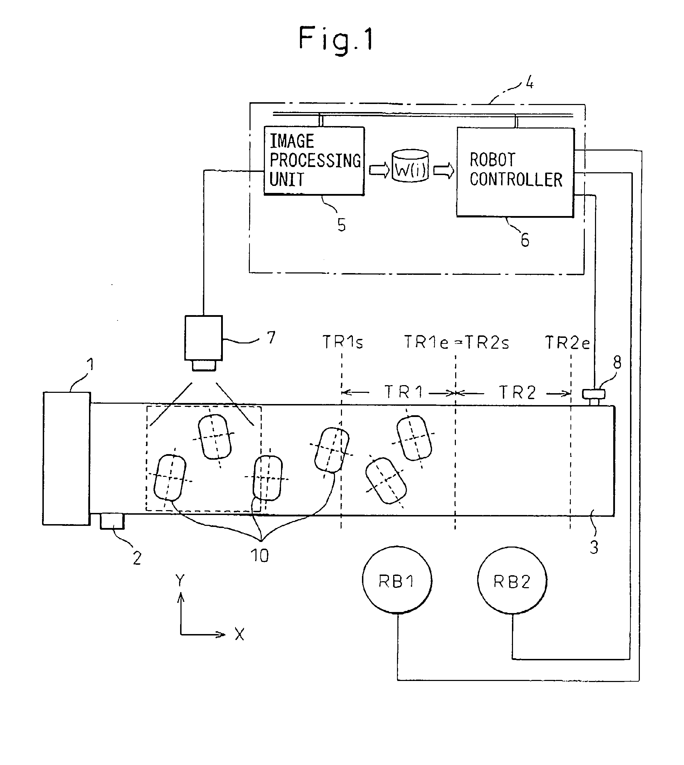

With reference to Fig. 1, a robotic physical distribution tracking system according to an embodiment of the present invention is shown.

In this embodiment, two robots RB1, RB2 for performing a tracking operation are disposed along a feeding direction of a feeding conveyor. A term "tracking operation" means handling a workpiece 10 conveyed on the feeding conveyor 3 while at the same time tracking the workpiece 10 constituting an object of operation and conveyed on the feeding conveyor 3. Further, a visual sensor is provided as a workpiece position detection means for the tracking operation. The visual sensor has an image processing unit 5 and a camera 7 connected to the image processing unit 5, and the image processing unit 5 processes an image provided by the camera 7 thereby to detect a position of a workpiece 10. A workpiece supply unit 1 continuously supplies a multiplicity of workpieces 10 constituting objects of the operation. At that time, the workpieces 10 are placed at random positions on the feeding conveyor. A drive shaft of the feeding conveyor 3 connected to the workpiece supply unit 1 is driven by a motor built into a drive source 2. A pulse coder 8 for detecting a rotational amount of the drive shaft of the drive source 2 or the drive motor is provided as a means for detecting a moving amount of the feeding conveyor 3, so that the moving amount of the feeding conveyor 3 is detected by counting the number of pulses in the pulse train output from the pulse coder 8.

In this embodiment, the visual sensor for detecting the position of the workpiece 10 on the conveyor 3 is in the form of the robot control unit 4 having the image processing unit 5 built therein. The robot control unit 4 in this embodiment has a robot controller 6 for controlling the two robots, and designates one of the two robots RB1, RB2 to perform the tracking operation, by acquiring data representing a workpiece position from the image processing unit 5 built therein and by using the count output from the pulse coder, thereby to control the tracking operation of the robot. In Fig. 1, a character "TR1" designates a tracking range of the robot RB1, in which the robot RB1 can grip the workpiece 10. A character "TR1s" designates an upstream boundary line of the tracking range TR1, and a character "TR1e" a downstream boundary line thereof. Similarly, a character "TR2" designates a tracking range of the robot RB2. A character "TR2s" designates an upstream boundary line of the tracking range TR2, and a character "TR2e" a downstream boundary line thereof.

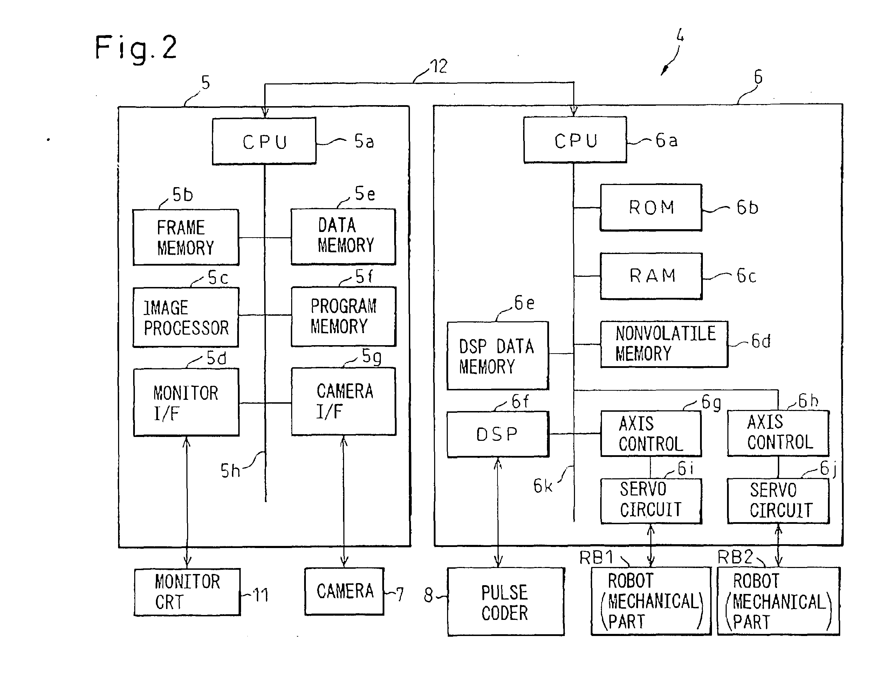

Fig. 2 is a block diagram schematically showing the internal configuration of the robot control unit 4. In Fig. 2, the image processing unit 5 built in the robot control unit 4 has a CPU 5a constituted by a microprocessor, which is connected with a frame memory 5b, an image processor 5c, a monitor interface 5d, a data memory 5e, a program memory 5f and a camera interface 5g through a bus 5h. The camera interface 5g is connected with a camera 7, and an image taken by the camera 7 is stored in the frame memory 5b. Data stored in the frame memory 5b is analyzed using the image processor 5c, thereby to determine the position of the workpiece 10. The data memory 5e has an area in which various setting data for the visual sensor and workpiece measurement position data are stored. An analysis program is stored in the program memory 5f. The CPU 5a is connected through a bus 12 of the robot control unit 4 with a CPU 6a of the robot controller 6 described below.

The robot controller 6 has a CPU 6a connected with the CPU 5a of the image processing unit 5 through the bus 12. The CPU 6a is connected through a bus 6k with a ROM 6b, a RAM 6c, a nonvolatile memory 6d, a digital signal processor (DSP) 6f and a DSP data memory 6e. The ROM 6b has stored therein a program for controlling the whole system, and the RAM 6c has temporarily stored therein data to be processed by the CPU. The nonvolatile memory 6d has stored therein an operation program, a setting data and a distribution processing program described later for the robots RB1, RB2. The DSP 6f is a processor for processing the output signals from the pulse coder 8, and the DSP data memory 6e has stored therein data processed by the DSP 6f and setting parameters. The DSP 6f has functions of counting an output from the pulse coder at an arbitrary time point in accordance with an instruction from the CPU, detecting a moving amount of the feeding conveyor 3 and writing the detected moving amount in a predetermined area of the DSP data memory 6e. The DSP data memory 6e can be also accessed from the CPU 5a of the image processing unit 5 through the CPU 6a of the robot control unit.

Further, in robot control unit 4 of this embodiment, two types of axis controller 6g, 6h are connected to the bus 6k in order to control two robots RB1, RB2. A mechanical part of the robot RB1 and a mechanical part of the robot RB2 are connected with the axis controllers 6g, 6h through servo amplifiers 6i, 6j, respectively. Also, the robot control unit 4 is connected through an input/output circuit with a motor drive unit (not shown) for driving the motor of the drive source 2 for the feeding conveyor 3.

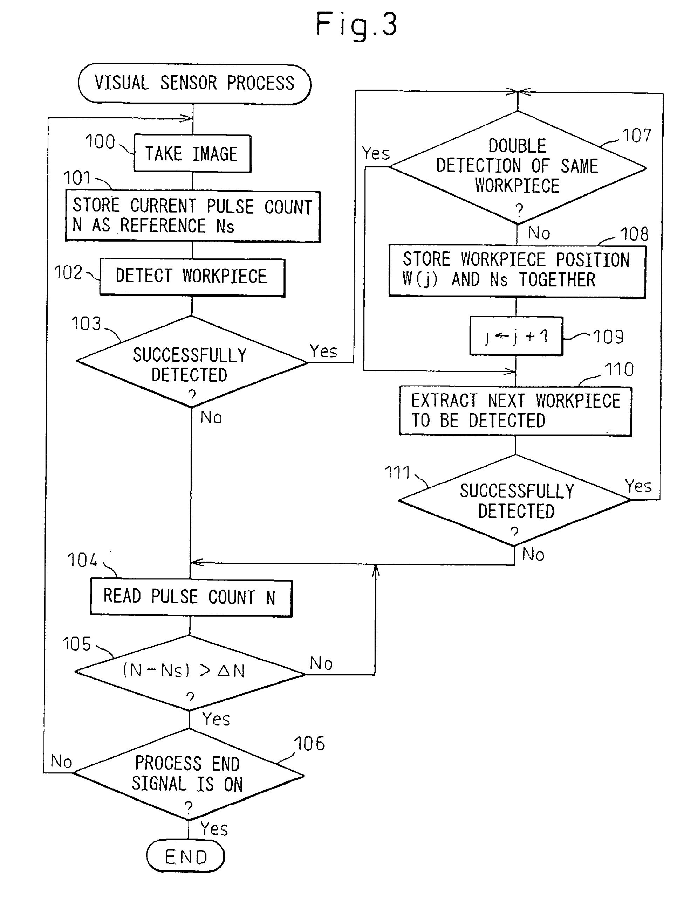

Fig. 3 is a flowchart of a workpiece detection process executed in the image processing unit 5.

When an operation start command is input into the robot control unit 4 and the CPU 5a of the image processing unit 5 then outputs an image taking instruction, an image is taken by the camera 7 and stored in the frame memory 5b (step 100). At the same time, a count Ns of the pulse coder at the time of acquiring the image is stored as a reference value in the read data memory 5e through the CPU 6a of the robot controller 6. The count Ns of the pulse coder is also stored in the DSP memory 6e (step 101). Further, the image acquired in step 100 is analyzed by the image processor 5c using an analysis program stored in the program memory 5f, thereby to detect a position of a workpiece 10 constituting a target object (step 102).

When the workpiece detection fails (step 103), the image processing unit 5 makes preparations for taking a next image. Specifically, when no workpiece is detected for the ground of the absence of the workpiece 10 in the visual field of the camera 7 or otherwise, the image processing unit 5 repeatedly reads the count N from the pulse coder 8 at a short cycle (step 104) to determine a moving amount (N - Ns) by which the feeding conveyor 3 has moved for a period from a time point at which the reference value Ns is stored to that time point, and waits until the determined moving amount (N - Ns) exceeds a threshold value (ΔN) (step 105). As the pulse coder 8 generates a pulse in accordance with the movement of the feeding conveyor 3, the moving amount of the feeding conveyor (and therefore the moving amount of the workpiece) can be determined by counting the pulses (although the moving amount is represented by the number of the pulses, the distance in terms of length can be acquired by multiplying the moving amount by a weight (distance conversion factor) for each pulse).

It is determined whether this moving amount (N - Ns) exceeds the threshold value ΔN, and if so, it is confirmed that a process end signal is not output (step 106) and the process then returns to step 100 and continues. The threshold value ΔN is set at a value slightly smaller than the visual field range of the camera 7 in the moving direction (i.e., the X axis direction) of the feeding conveyor 3. In the coordinate system for the robots RB1, RB2 and the feeding conveyor 3, a direction in which the feeding conveyor 3 moves is defined as a positive direction along an X-axis, a direction parallel to a surface of the feeding conveyor and orthogonal to X-axis as a Y-axis, and a direction orthogonal to the X- and Y- axes as a Z-axis.

On the other hand, when it is determined that a workpiece 10 constituting a target object is detected in step 103, the process proceeds to step 107 to check a result of the position detection as to whether or not a double acquisition check for an image data of the same workpiece has been conducted. Specifically, the double acquisition check is conducted by judging whether or not the detected workpiece position is a position which has been already detected and stored in the data memory 5e. If it is the double acquisition, the process proceeds to step 110 described later. On the other hand, if it is not the double acquisition, a workpiece detection position W(j) is stored in the data memory 5e as being associated with the reference value Ns determined in step 101. Then, an index j representing the number of detected workpieces is incremented by 1 (step 109). The index j is initially set at 0, after the power is applied to the robot control unit 4 and before the visual sensor starts the operation of taking the image.

Next, a process for extracting another workpiece 10 is executed, and it is detected whether or not another workpiece 10 exists (steps 110 and 111). If another workpiece 10 is detected, the process returns to step 107. The process from step 107 to step 111 is repeated as many times as the number of the detected workpieces 10. This process from steps 107 to step 111 is intended to store a position W(j) of each workpiece 10 when a plurality of workpieces is detected in the images taken and acquired in step 100.

In this way, one or more positions W(j) of one or more workpieces 10 detected by taking one image are stored together as being associated with a corresponding count Ns of pulses from the pulse coder 8. If another workpiece 10 cannot be detected in step 111, the process proceeds to step 104 and waits for a next timing of taking an image. After an image is taken, the feeding conveyor 3 moves by a predetermined distance (a distance corresponding to the number ΔN of pulses). If a process end signal has not yet been generated, a new image is taken and the process of step 100 and subsequent steps is repeated. As a result, the count Ns of pulses from the pulse coder 8 at the time of taking the image and the position W(j) of each workpiece 10 at the time of taking the image are stored sequentially (j = 0, 1, 2....) in the data memory 5e.

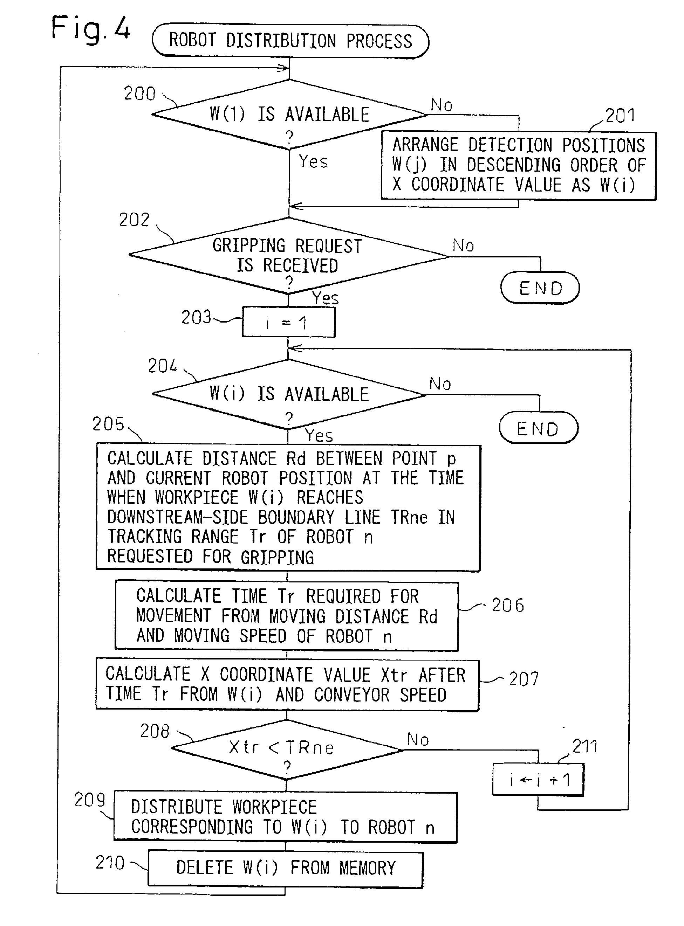

On the other hand, the robot controller 6 executes the robot distribution process shown in the flowchart of Fig. 4 by means of the robot distribution control means. The CPU 6a of the robot controller executes the robot distribution process and each robot operating process using a multitask function thereof.

When an operation start command is input to the robot control unit 4, the CPU 6a of the robot controller 6 executes the robot distribution process shown in Fig. 4 for each robot distribution process period. Firstly, it is determined whether or not a workpiece position W(1) is stored in the head of the RAM 6c for storing a workpiece position (step 200). If the workpiece position W(1) is stored therein, the process proceeds to step 202. If the workpiece position W(1) is not stored therein, a new workpiece position data W(j) which is not delivered from the image processing unit 5 to the robot controller 6 is read and the corresponding data is stored in the order of workpiece position from the downstream side of the feeding conveyor 3. Specifically, the workpiece positions W(j) are rearranged in the ascending order of the count Ns, and within the same count Ns, in the descending order of the X-axis value along the feeding direction of the feeding conveyor 3, and stored in the RAM 6c (step 201), followed by proceeding to step 202. Regarding W(i) where i = 1, 2..., W(1) represents data relating to the most downstream workpiece position.

In step 202, it is determined whether or not a request for picking up the workpiece has been issued in the operation process of any one of the robots RB1, RB2. If no such a request has been issued, the robot distribution process for the particular period is completed. On the other hand, if the request for picking up the workpiece has been issued in the operation process of any one of the robots, the index i for designating the workpiece position data stored in the RAM 6c in the order of workpiece position from the downstream side of the feeding conveyor 3 is set to "1" (step 203), and the position data W(i) relating to the workpiece positioned at the most downstream location is designated. It is then determined whether or not this position data W(i) is stored in the RAM 6c. If the position data W(i) is not stored (which means that there is no stored position data), the process for the particular period is completed.

On the other hand, when the position data W(i) is detected in step 204, it is determined whether or not the robot n (n = RB1 or RB2 in this case) that has been requested for picking up a workpiece 10 can grip the workpiece 10 corresponding to the position data W(i).

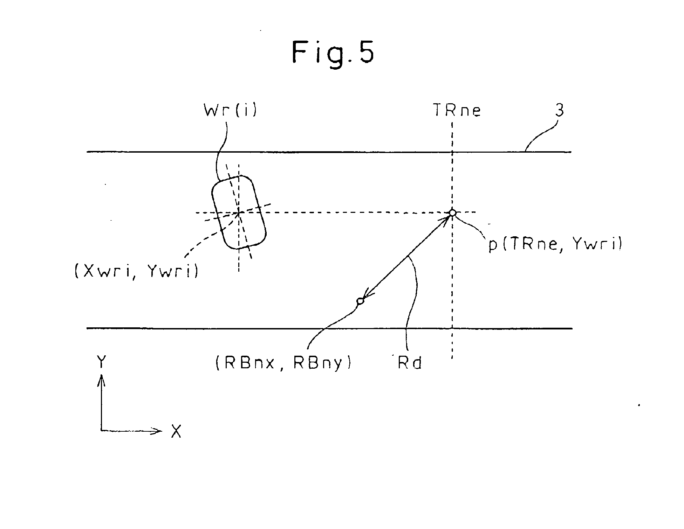

Fig. 5 is a diagram illustrating a principle of operation of the process of determining whether or not the robot n can grip the workpiece.

The X-Y coordinate of the current position of the robot n that has been requested for picking up a workpiece is defined as (RBnx, RBny), and the X-Y coordinate of the current position Wr(i) of the workpiece corresponding to the read position data W(i) (X-Y coordinate (Xwi, Ywi)) is defined as (Xwri, Ywri). The current workpiece position (Xwri, Ywri) can be determined from a value obtained by subtracting the stored pulse count Ns from the current pulse count N, a value of X-coordinate of a point corresponding to the original point of the camera coordinate system for the camera 7, a distance between the downstream boundary lines TRne of the tracking ranges TRn of the adjacent robots n, and the detection coordinate position (Xwi, Ywi). As the workpiece is moved along the Y-axis by the feeding conveyor 3, the value of the Y-coordinate Ywri of the current workpiece position is equal to Ywi.

A point p (TRne, Ywri) which the workpiece corresponding to the read position data W(i) reaches when it moves to the downstream side boundary line TRne of the tracking range TRn of the robot n having the Y-coordinate value Ywri is determined, and a distance Rd between the coordinate (RBnx, RBny) of the current position of the robot n and the point p is calculated (step 205). Further, a time Tr required for the robot n to move the distance Rd is calculated from the operating speed of the robot n and the distance Rd (step 206). Next, the X-coordinate Xtr of the workpiece corresponding to the read position data W(i) after time Tr is calculated from the current position (Xwri, Ywri) of the workpiece corresponding to the read position data W(i) (step 207). If the X-coordinate Xtr is positioned upstream of the downstream boundary line TRne of the tracking range TRn, then it is determined that the robot n can grip the workpiece (step 208), and the workpiece corresponding to the detection position W(i) is distributed to the robot n (step 209). Further, after the position data W(i) relating to the distributed workpiece is then deleted from the storage, the position data W(i) are rearranged sequentially from the downstream side (step 210) and the process returns to step 200. The robot n to which the workpiece 10 corresponding to the detection position W(i) has been distributed executes the robot operation for gripping the distributed workpiece 10 (i.e., holds the workpiece 10 by gripping or sucking and picks it up), and further executes another robot operation for delivery, etc. to the next stage.

On the other hand, if the X coordinate Xtr determined in step 207 is positioned downstream of the downstream side boundary line TRne of the tracking range TRn, it is determined that the robot n cannot grip the workpiece (step 208) and the index i is incremented (step 211). Then, the process returns to step 204 and it is determined whether or not the position data W(i) is available. For example, in the case where i = 2, it is determined whether or not position data corresponding to the second position counted from the downstream side of the feeding conveyor is available. If such a position data W(i) is available, the process including step 204 and subsequent steps is executed.

When a request for picking up a workpiece is issued to the robot RB1, RB2, each robot RB1, RB2 holds and picks up the workpiece 10 positioned at the most downstream position where the robot can grip the workpiece, as described above, and delivers it to the next step or stage, or performs the like operation.

When the feeding speed of the feeding conveyor 3 is low as compared with the speed of the workpiece picking-up operation of the robots RB1, RB2, the workpieces 10 conveyed by the conveyor 3 are gripped and picked up by the robot RB1 arranged more upstream and the number of workpieces picked up by the robot RB2 arranged more downstream is decreased. On the other hand, when the feeding speed of the feeding conveyor 3 is increased, the number of workpieces 10 that cannot be picked up by the robot RB1 is increased. The robot RB2 arranged downstream has a margin of operation corresponding to the tracking range TR1 of the upstream robot RB1, and therefore, can pick up even workpieces that cannot be picked up by the robot RB1. However, when the feeding speed of the feeding conveyor 3 is further increased, the workpieces 10 that cannot be picked up even by the robot RB2 appear and are conveyed downstream without being picked up from the feeding conveyor 3.

In such a case, it is necessary, therefore, to adjust the feeding speed of the feeding conveyor 3 to be suitable to the operating speed of the robots, thereby to reduce the waiting time of the robots RB1, RB2 and to achieve the optimum feeding speed of the feeding conveyor at which all or most of the workpieces can be picked up. For this purpose, in this embodiment, the robot control unit 4 is also adapted to control the motor speed of the drive source 2 for driving the feeding conveyor 3. Though not shown in Figs. 1 and 2, the robot controller 6 is connected through the input/output interface to the motor drive unit for the motor of the drive source 2 to drive the feeding conveyor. The CPU 6a of the robot controller 6 executes the robot distribution process and the conveyor speed adjusting process using the multitask function thereof.

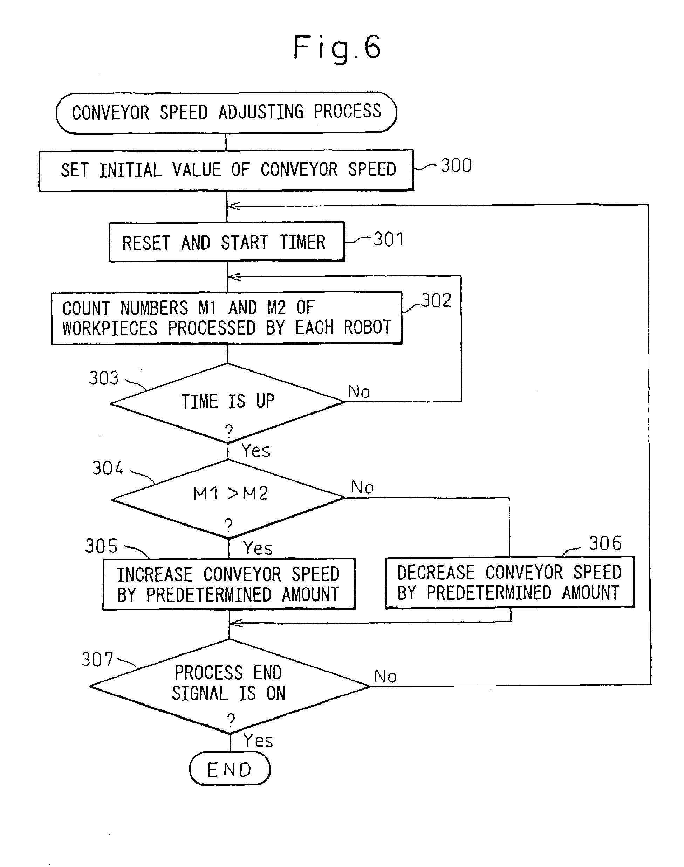

Fig. 6 is a flowchart of the conveyor speed adjusting process executed by the CPU 6a of the robot controller. Firstly, the initial value of the conveyor speed is set and output to the motor drive unit of the motor for driving the feeding conveyor (step 300). A timer for counting a preset time is reset and started (step 301). Until the timer counts and the preset time is up, the numbers M1, M2 of the workpieces 10 processed by the robots RB1, RB2 are counted (steps 302 and 303). When the preset time for the timer is up, the counted numbers M1, M2 of the handled workpieces are compared with each other (step 304). If the number M1 of the workpieces processed by the upstream-side robot RB1 is larger than the number M2 of the workpieces processed by the downstream-side robot RB2, the conveyor speed is increased by a predetermined constant (step 305). If the number of workpieces processed by the downstream-side robot RB2 is larger than the number of workpieces processed by the upstream-side robot RB1, in contrast, it is judged that the conveyor speed is too high, and the conveyor speed is reduced by a predetermined constant (step 306). After the conveyor speed command has been output, a signal is evaluated for indicating whether or not the conveyor speed adjusting process is to be completed (step 307). If the process end signal has not been on, the process returns to step 301, and the process described above continues to be executed. On the other hand, if the process end signal has been on, the process exit the above process loop.

Although the present invention has been described with reference to the embodiments shown in the accompanying drawings, these embodiments are only illustrative and not limitative. Accordingly, the scope of the present invention is limited by the appended claims, and the embodiments of the present invention may be modified or changed without departing from the scope of the claims.

## Claims

1. A robotic physical distribution tracking system comprising a workpiece position detection means for detecting a position of a workpiece conveyed on a feeding conveyor, and a conveyor moving amount detection means for detecting a moving amount of said feeding conveyor, so that a robot handles a workpiece conveyed by said feeding conveyor, while tracking said workpiece, based on a current position of said workpiece determined from a workpiece position determined by said workpiece position detection means and a moving amount of said conveyor determined by said conveyor moving amount detection means, said robotic physical distribution tracking system **characterized by** further comprising:
a plurality of robots disposed along said feeding conveyor; and
a workpiece distribution control means for judging whether or not one of said plurality of robots can handle one of a plurality of workpieces conveyed by said feeding conveyor, and determining a workpiece to be handled by said one of said plurality of robots, from current positions of said plurality of workpieces, a current position of said one of said plurality of robots, an operating speed of said one of said plurality of robots, and a moving speed of said conveyor.

2. The robotic physical distribution tracking system according to claim 1 wherein, when a request to pick up a workpiece is issued to any one of said plurality of robots, said workpiece distribution control means judges whether or not each of said plurality of workpieces can be handled, in order, from a workpiece positioned most downstream on said feeding conveyor.

3. The robotic physical distribution tracking system according to claim 1, further comprising a means for adjusting the speed of said feeding conveyor.

4. The robotic physical distribution tracking system according to claim 2, further comprising a means for adjusting the speed of said feeding conveyor.
